# EUROPEAN PATENT SPECIFICATION

(11) **EP 2 521 745 B1**
(45) Date of publication and mention of the grant of the patent: **05.08.2015**
(21) Application number: 11700012.5
(22) Date of filing: 04.01.2011
(51) Int. Cl.: C08G 18/08, C08G 18/62, C09D 133/06

(54) **SOLVENT BORNE TWO-COMPONENT POLYURETHANE COATING COMPOSITION**
LÖSUNGSMITTELBASIERTE ZWEIKOMPONENTEN-POLYURETHAN-BESCHICHTUNGSZUSAMMENSETZUNG
COMPOSITION DE REVÊTEMENT POLYURÉTHANE À DEUX COMPOSANTS AU SOLVANT

(30) Priority: 06.01.2010 EP 10150169
(43) Date of publication of application: 14.11.2012
(73) Proprietor: Akzo Nobel Coatings International B.V., 6824 BM Arnhem (NL)
(72) Inventor: PALM, Thomas, D-52353 Düren (DE); KRAUSE, Andrea, D-42699 Solingen (DE)
(74) Representative: Akzo Nobel IP Department
(86) International application number: PCT/EP2011/050047
(87) International publication number: WO 2011/083109

(56) References cited:
- US-A- 5 336 711
- US-B1- 6 225 398

## Description

### Field of the Invention

The present invention relates to a solvent-borne two component (2K) polyurethane coating. The present invention also relates to the use of this two component (2K) polyurethane coating composition as a protective coating for, in particular, wooden substrates.

### Background to the Invention

Two component (2K) solvent-based polyurethane coatings systems have become an industry standard for weatherable coats. These coatings systems can combine exceptional resistance to chemical and physical damage with high gloss levels and a long-term retention of gloss, colour and mechanical properties. Traditionally, these coatings systems have been formulated with: a) the first component comprising a high molecular weight, high functionality polyol combined where desired with pigments, additives and further polyactive hydrogen compounds; and, b) the second component comprising a low viscosity, high functionality liquid polyisocyanate crosslinker.

Recent environmental legislation has established limits on the amounts of volatile organic compounds (VOC's) that are allowed in different coating systems. Consequently, there is an acknowledged need to reformulate 2K polyurethane coating compositions to have lower overall organic solvent demands.

One strategy found in the art for lowering this VOC level has been to employ lower molecular weight (lower viscosity) polyols which have a reduced solvent demand. However, in incorporating, for example, low molecular weight hydroxy acrylics or blocked systems such as oxazolidines into polyurethane coatings systems, there is an inevitable trade-off in the physical properties of the resulting low VOC coatings and / or in the handling of the reactive mixture: Many of these low VOC polyurethane coatings suffer from short pot lives, poor solvent resistance, poor flexibility, and an extreme sensitivity to catalyst level and its effect on cure profile. Furthermore, the formulations often require unattractive mixing ratios of polyol to polyisocyanate.

An alternative strategy found in the art is the partial replacement of organic solvents in the coating compositions with water. It was recognized that, although aliphatic polyisocyanates do react to some extent with water to form CO₂ and urea groups, this reaction is distinctly slower than the reaction of the isocyanate groups with the hydroxy groups of the polyol which forms the polyurethane network. Also, because water leaves the drying polyurethane film quite quickly, this limits the impact of the NCO-water reaction. However, because of the NCO-water reaction, water cannot be introduced into the coating system via the polyisocyanate component but must be added within a stable polyol dispersion. Moreover, to restrain the concurrent reaction NCO-water reaction and promote the isocyanate/polyol reaction pathway, there needs to be an efficient dispersion of the polyisocyanate into the polyol phase. The technical problem then faced by formulators is to find the component chemistry which facilitates this emulsification step.

In one solution to this problem, the polyol has been provided with both hydroxyl functionality for the polyurethane-forming reaction and acid groups for water dispersibility.

U.S. Patent Nos. 5,389,718 and 5,563,207 *inter alia* propose a second solution whereby the polyisocyanate is modified by partially reacting it with a hydrophilic polyether. Making the polyisocyanate hydrophilic in this way provides an emulsifiable crosslinker having improved compatibility with the co-reactants but the incorporation of that polyisocyanate into the coating can often render it unacceptably water sensitive.

A third solution has been to employ hydrophobic polyisocyanates - such as Desmodur® N 3600 (Bayer AG) - which are of low viscosity and which are mixed with the polyol component under high shear in the presence of emulsifiers such as phthalates. The use of high shear is obviously energy intensive. Moreover, the addition of emulsifiers means that certain formulation space is occupied with an organic compound.

### Statement of the Invention

The present inventors have realised that the formulation of a VOC compliant coating and more particularly a VOC compliant 2K polyurethane coating can be effected through the choice of solvent which is combined with water as the dispersing medium for the polyol component.

In accordance with a first aspect of the present invention there is provided a solvent-borne two-component polyurethane coating composition comprising: as a first component, a dispersion comprising: a hydroxyl-functional acrylate binder; a first solvent being at least one compound selected from the group consisting of 2-propoxyethanol and 2-butoxyethanol; water in an amount of from 5 to 50%, preferably from 10 to 50% by weight of the composition; and, optionally at least one further organic solvent; and, as a second component, at least one crosslinking agent having isocyanate groups.

In the presence of 2-propoxyethanol and / or 2-butoxyethanol a higher volume of water can be employed in forming stable 2K polyurethane coating compositions than would be used with the organic solvents typically present in the polyol dispersion. Without being bound by theory, the 2-propoxyethanol and / or 2-butoxyethanol have a high miscibility with water: When the polyisocyanate is mixed - usually in its own organic carrier solution - into the polyol dispersion, the partitioning which occurs allows for a homogenous distribution of the polyisocyanate throughout that dispersion. There is concomitantly an efficient reaction between the polyisocyanate and the polyol which minimizes the amount of unreacted polyisocyanate which might solidify from solution whilst the coating solvent evaporates.

Particularly stable two-component polyurethane coatings which are characterized by limited phase separation have been obtained where the composition comprises from 10 to 50 wt.% water and / or from 10 to 40 % of said first solvent by weight of the composition.

The coating composition can have high solids content. Moreover, the coating compositions and resulting coatings possess a high reactivity coupled with a good pot life, good resistance to solvents, water and environmental influences and good optical and mechanical properties.

In accordance with a second aspect of the present invention there is provided a process for coating a wooden, metal, glass, plastic, mineral or textile substrate comprising applying the aforementioned coating composition to the substrate and curing the coating at a temperature from 0° to 130°C. This process has particular utility for wooden substrates.

### Definitions

The term "solvent borne coating composition" as used herein means a coating composition the viscosity of which is adjusted by the use of organic solvent (Art. 2, Directive 2004/42/CE of the European Parliament and of the Council). Such a coating composition is therefore distinct from a water-borne (WB) coating composition, the viscosity of which is adjusted by the use of water: in a water-borne coating composition the continuous phase is water and thereby water is used to dilute said composition.

The prefix "poly" used herein in designations such as "polyol", "polyisocyanate", "polyether" or "polyamine" indicates that the substance in question contains, formally, more than one of the functional groups occurring in its name, per molecule.

The term "(meth)acrylate" as used herein denotes esters of both acrylic acid and of methacrylic acid. Similarly, "(meth)acrylic acid" identifies not only acrylic acid but also methacrylic acid.

Although the first component dispersion will hereinafter be described with reference to 2K polyurethane coatings, the skilled reader will recognise that this dispersion may have similar utility in either one-component coatings with low reactivity or blocked crosslinking agents or in other two-component compositions. In this regard, suitable alternative crosslinking resins include amide- and amine-formaldehyde resins, phenolic resins, aldehyde and ketone resins, such as phenol-formaldehyde resins, resols, furan resins, urea resins, carbamic acid ester resins, triazine resins, melamine resins, benzoguanamine resins, cyanamide resins, aniline resins and mixtures thereof. Also suitable are blocked polyisocyanates.

Two-component coating compositions in the context of the present invention are understood to be coating compositions in which the binder component and cross-linking agent component must be stored in separate vessels because of their (high) reactivity. The two components are mixed only shortly before application and then react, typically without additional activation. However, catalysts may also be employed or higher temperatures applied in order to accelerate the cross-linking reaction.

### Detailed Description of the Invention

The hydroxyl-functional acrylate binder of the first component should typically have: A number average molecular weight (Mₙ), as determined by gel permeation chromatography, of from about 500 to 50,000, preferably about 1,000 to 10,000; a hydroxyl value of from about 20 to 300, preferably from 30 to 250mg KOH/g of polymer; an acid value (based on solids) of from 0 to 150, preferably from 0 to 100 mg KOH/g of polymer; and, a content of sulfonic acid and / or carboxyl groups of from 5 to 450, preferably 20 to 300 milliequivalents per 100 g of polymer (solids).

Such hydroxyl-functional acrylate binders can of course be obtained from known commercial sources, in which case it is preferred to use solvent-borne commercial products because these require little pre-processing before employment in the present invention. Examples of such commercial resins which may be mentioned are: Desmophen A 450 BA, Desmophen A 450 BA/X, Desmophen 800, Desmophen 1200 and Desmophen 670 (all available from Viverso); and, Synthalat 1633, Synthalat 1653 and Synthalat A 333 (all available Synthopol). Prior to the stirring or emulgation step described below, the water and / or solvent level of a commercial preparation can be increased or decreased using techniques, such as distillation, which are well known to a person of ordinary skill in the art.

The hydroxyl-functional resin, provided as a solvent-borne lacquer, is admixed, generally under high speed stirring, with an optionally preheated, aqueous solution of 2-propoxyethanol and / or 2-butoxyethanol to form the first component. This serves to stably disperse (emulsify) the water into the solvent-borne lacquer system.

Equally such hydroxyl-functional polymers can be derived in the known manner by copolymerization of olefinically unsaturated monomers, olefinically unsaturated monomers containing hydroxyl groups and the monomers containing acid groups (e.g. sulfonic acid and/or carboxyl groups), these three monomer groups being generally admixed and copolymerized as the monomers. After copolymerization, the acid groups are at least partly neutralized.

Typically, the monomers containing acid groups are used for the purpose of incorporating carboxyl and/or sulfonic acid groups in the copolymers. As such, the "acidic" co-monomers will therefore be olefinically unsaturated, polymerizable compounds which contain at least one carboxyl and/or sulfonic acid group, for example: Olefinically unsaturated mono- or dicarboxylic acids having a molecular weight of 70 to 250, such as (meth)acrylic acid, maleic acid or itaconic acid; olefinically unsaturated compounds containing sulfonic acid groups, such as 2-acrylamido-2-methylpropanesulfonic acid; and, mixtures thereof.

The amount of these hydrophilic monomers used in a copolymerization will affect the water solubility or dispersibility of the copolymers, particularly after at least partial neutralization of the acid groups. In general, in deriving polymers suitable for the first component of the present invention, "acidic" co-monomers should be used in quantities of from 1 to 30% by weight, preferably from 5 to 20% by weight, based on the total weight of the monomers used.

The monomers containing hydroxyl groups are used in such quantities that the resultant polymers have the hydroxyl values set forth above, these values corresponding to a hydroxyl group content of the polymers of from about 0.5 to 8, preferably from 1 to 5% by weight. In general, the hydroxy-functional co-monomers are used in quantities of about 1 to 75% by weight, preferably about 5 to 50% by weight, based on the total weight of the monomers used. In addition, it is important to ensure that the quantity of hydroxy-functional monomers is selected to provide copolymers containing an average of at least two hydroxyl groups per molecule.

Suitable monomers containing hydroxyl groups include, in particular, hydroxyalkyl esters of (meth)acrylic acid, preferably containing 2 to 4 carbon atoms in the alkyl radical. As specific examples, 2-hydroxyethyl (meth)acrylate, 2- or 3-hydroxypropyl (meth)acrylate and the isomeric hydroxybutyl (meth)acrylates may be mentioned.

The third group of olefinically unsaturated monomers which may be used for the production of the copolymers are olefinically unsaturated compounds which contain neither acidic nor hydroxyl groups. These compounds include esters of acrylic acid or methacrylic acid containing from 1 to 18, preferably from 1 to 8 carbon atoms in the alcohol radical, such as methyl (meth)acrylate, ethyl (meth)acrylate, isopropyl (meth)acrylate, n-propyl (meth)acrylate, n-butyl (meth)acrylate, 2-ethylhexyl (meth)acrylate, n-stearyl (meth)acrylate, styrene, alkyl-substituted styrenes, (meth)acrylonitrile, vinyl acetate, vinyl stearate and mixtures thereof. Co-monomers containing epoxide groups such as glycidyl (meth)acrylate or monomers such as N-methoxymethyl (meth)acrylamide may be used in small quantities.

The monomers of this third group are used in quantities of up to 90% by weight, preferably from about 40 to 80% by weight, based on the total weight of the monomers used.

The hydroxyl-functional acrylate polymers may be produced by standard polymerization processes which may be continuous or discontinuous. The polymers are produced in an organic solvent, the point of solvent addition to the monomer mixture being determined by the polymerisation process being employed. As is known in the art, suitable organic solvents include: aromatic hydrocarbons such as benzene, toluene, xylene and chlorobenzene; esters such as ethyl acetate, butyl acetate, methyl glycol acetate, ethyl glycol acetate and methoxypropyl acetate; ethers such as butyl glycol, tetrahydrofuran, dioxane and ethyl glycol ether; ketones such as acetone and methyl ethyl ketone; halogen-containing solvents such as methylene chloride and trichloromonofluoroethane; and, mixtures thereof.

The polymerization may be initiated by initiators having a decomposition half time at 80°C to 180°C of from about 0.01 to 400 minutes. In general, the copolymerization reaction takes place at temperatures in the range previously set forth, preferably at a temperature of about 100°C to 160°C under a pressure of about 1000 to 20,000 mbar. The exact polymerization temperature is determined by the type of initiator used. The initiators are used in quantities of about 0.05 to 6% by weight, based on the total quantity of monomers.

Suitable initiators include aliphatic azo compounds such as azoisobutyronitrile and peroxides such as dibenzoyl peroxide, t-butyl perpivalate, t-butyl per-2-ethylhexanoate, t-butyl perbenzoate, t-butyl hydroperoxide, di-t-butyl peroxide, cumene hydroperoxide and dicyclohexyl and dibenzyl peroxydicarbonate.

The molecular weight of the hydroxyl functional polymers may be regulated by standard regulators such as n-dodecylmercaptan, diisopropyl xanthogene disulfide, di-(methylenetrimethylolpropane)-xanthogene disulfide and thioglycol. They are generally added in quantities of up to about 3% by weight, based on the monomer mixture.

At the completion of the polymerization, the hydroxyl-functional polymer is present, dissolved in organic solvents. As was discussed above with regard to the commercial binder preparations, part of the organic solvent may be removed from the polymerization product by simple distillation or azeotropic distillation prior to the stirring (or emulgation) step described below.

To form the first component of the coating composition, the organic solution of the hydroxyl-functional polymer is then stirred - generally at high speed - into an optionally pre-heated, aqueous solution of the at least one compound selected from the group consisting of 2-propoxyethanol and 2-butoxyethanol. This serves to emulsify the water into the solvent-borne lacquer system.

The quantitative ratio of the essential and optional ingredients of the first component should preferably be established such that the resultant dispersion has a solids content of 20 to 80% by weight, preferably from 35 to 60% by weight.

Optionally, the first component of the composition may contain one or more further polymeric polyols having 2 or more hydroxyl groups that are capable of reacting with an isocyanate group. These optional, further polyols should be substantially linear with a molecular weight in the range from 300 to 20,000, preferably in the range from 500 to 2,500. Preferred polyols are polyesters, polyacetals, polycarbonates, polyethers, polythioethers, polyamides and/or polyester amides containing on average 2 to at most 4 hydroxyl groups.

The first component of the composition may also optionally contain: polymeric or co-polymeric polyhydroxyls which contain basic nitrogen atoms, urethane or urea groups; the analogs of the above mentioned polymeric or co-polymeric polyhydroxyls which have been terminated by amino or sulfide groups; and, polyols obtainable by complete or partial ring opening of epoxidized triglycerides with primary or secondary hydroxyl compounds.

The crosslinking agents present in the second component of the 2K polyurethane coatings of the present invention are polyisocyanate compounds which have free isocyanate groups and which include one or more the following: aromatic, cycloaliphatic and aliphatic diisocyanates; partly masked polyisocyanates; polyisocyanates partly reacted, for example, with phenols, tertiary butanol, phthalimide and caprolactam; chlorinated and brominated diisocyanates; and, sulfur and phosphorus-containing diisocyanates. These polyisocyanates are optimally provided as a separate cross-linking component in a two-component coating composition.

Suitable examples of diisocyanates, which may be used alone or in admixture, include but are not limited to: meta-tetramethylxylene diisocyanate (TMXDI); isophorone diisocyanate (IPDI); tetramethylene diisocyanate; hexamethylene diisocyanate (HDI); trimethyl hexamethylene diisocyanate; 2,4-toluene diisocyanate; 2,6-toluene diisocyanate; dimethylbenzyl isocyanate; 4,4'dicyclohexylmethane diisocyanate (H12MDI); benzene 1,3-bis (1-isocyanato-1-methylethyl); 1-5 naphthalene diisocyanate (NDI); p-phenylene diisocyanate (PPDI); trans-cyclohexane-1,4-diisocyanate; bitolylene diisocyanate (TODI); dimeric tolylene diisocyanate; 4,4'-diphenylmethane diisocyanate; 4,4'-diphenyl dimethyl methane diisocyanate; di- and tetraalkyl diphenyl methane diisocyanate; 4,4'-dibenzyl diisocyanate; 1,3-phenylene diisocyanate; 1,4-phenylene diisocyanate; the isomers of tolylene diisocyanate; 1-methyl-2,4-diisocyanatocyclohexane; 1-isocyanatomethyl-3-isocyanatomethyl-3-isocyanato-1,5,5-trimethyl cyclohexane; cyclohexane-1,4-diisocyanate; 1,2-diisocyanatododecane; 1,6-diisocyanato-2,2,4-trimethyl hexane; 1,6-diisocyanato-2,4,4-trimethyl hexane; tetramethoxy butane-1,4-diisoyanate, butane-1,4-diisocyanate, hexane-1,6-diisocyanate, dicyclohexyl methane diisocyanate; ethylene diisocyanate; phthalic acid-bis-isocyanatoethyl ester; 4,4'-diisocyanatophenyl perfluoroethane; 1-chloromethylphenyl-2,4-diisocyanate; 1-bromomethylphenyl-2,6-diisocyanate; 3,3-bis-chloromethylether-4,4'-diphenyl diisocyanate; and, dimer fatty acid diisocyanate.

The isocyanate should have an average functionality of from 2.0 to 3.2, preferably from 2.2 to 3.0 isocyanate moieties per molecule, and an NCO content of from 10 to 35% by weight.

Non-limiting examples of commercially available products, which may be used as or incorporated in the second component of the coating composition, are: Tolonate HDB 75, Tolonate LV, Tolonate LV2, Tolonate IDT (all available from Perstorp / Rhodia); and, Desmodur N 75 BA and Desmodur Z 4470 BA (both available from Bayer).

The solids content of the second component is generally in the range from 40 to 100 wt.%, and is preferably from 60 to 100 wt.%. Where the isocyanate is to be solvent-borne, particularly suitable solvents include but are not limited to: ethyl acetate; propyl acetate; butyl acetate; methylethylketone; methylisobutylketone; ethylglycol acetates; 1,2-diacetoxy-propane; 1-methoxy-2-propyl acetate; 1-ethoxy-2-propyl acetate; 1-butoxy-2-propyl acetate; methoxybutyl acetate; 2-butoxyacetate; and, dipropylene glycol dimethyl ether (CAS 11109-77-04). In addition to acetate esters, it will be recognized that other aliphatic esters - such as C₁ - C₄ propionate, butyrate and valerate esters - may also act as solvents in the second component.

The two components of the coating composition are brought together to form a reaction mixture which comprises the at least one diisocyanate and the at least one hydroxyl functional polymer. The two components are combined in such amounts that the ratio of equivalents of isocyanate groups to the equivalents of isocyanate-reactive groups in the coating composition is from 0.5:1 to 6:1 and preferably about 1:1. This reaction step should typically take place in a suitable reactor wherein the reactants are suitably combined, mixed, and reacted and wherein heat may be transferred into, and away from, the reactor. The reaction is also preferably conducted in a nitrogen or inert gas atmosphere that minimizes or eliminates the further introduction of water into the reaction mixture. The first and second components may be added into the reactor continuously, gradually over time (such as in a semi-batch process) or batch-wise. Preferably the first and second components are gradually added to the reactor.

The conventional additives of coating technologies, such as defoaming agents, pigments, dispersing auxiliaries, flow additives, matting agents, skin prevention agents, anti-settling agents and emulsifiers can be added before, during or after the preparation of the coating compositions by mixing with the individual components.

Where the isocyanate groups are provided in excess of the hydroxyl groups in the 2K coating composition, chain extending agents having active hydrogen atoms and generally a number average molecular weight of less than 400 may be included in the coating composition. Chain extending agents are known in the art, including for instance primary or secondary amine functional compounds and encompassing also polyamine compounds having terminal primary amine groups as well as internal secondary amine groups. Aliphatic, cycloaliphatic and aromatic diamines are preferred because they generally provide the maximum increase in molecular weight through chain extension without causing gelling of the dispersion.

As is also known in the art, the coating composition may further comprise chain terminating agents which will act to control the molecular weight of the polyurethane polymer formed by reaction of the first and second components. Useful chain terminators include aminoalcohols, like ethanolamine, propanolamine, butanolamine, N-methylethanolamine, dimethylethanolamine, N-methylisopropanolamine, taurine and isethionic acid.

A stoichiometric excess of isocyanate reactive groups in the coating composition may also be neutralized by the addition of one or more neutralizing agents. Suitable neutralizing agents include: inorganic bases such as potassium hydroxide and lithium hydroxide; and, tertiary amines such as triethylamine, tri-butyl amine, monoethyl dipropyl amine, mono-ethyl dibutyl amine, diethyl mono-propyl amine, and diethyl monobutyl amine.

The first component of the composition may optionally further comprises a catalyst which will act to shorten the overall reaction time between the isocyanate and the isocyanate-reactive groups when they are brought together. Suitable catalysts include: tin based materials such as di-butyl tin dilaurate, dibutylbis(laurylthio)stannate, dibutyltinbis(isooctylmercaptoacetate), tin octoate, and dibutyltinbis(isooctylmaleate); tertiary amines such as 1,4-diazabicyclo[2.2.2]octane (DABCO), pentamethyldipropylenetriamine, bis(dimethylamino ethyl ether), pentamethyldiethylenetriamine, phenol salt of 1,8-diazabicyclo[5.4.0]undecene-7 (commercially available as U-CATSAI, Sun Apro K.K.), dimethylcyclohexylamine, 2,4,6-tris(N,N-dimethylaminomethyl)phenol (DMT-30), 1,3,5-tris(3-dimethylaminopropyl)hexahydro-s-triazine; amidine complexes of zinc(II); zinc carboxylates; bismuth carboxylates; and, ammonium salts.

The amount of the catalyst present during the reaction is generally in the range of from 0% to 2% and preferably from 0.05% to 1.75% by weight of the overall composition.

The two components of the coating composition are advantageously provided in a pack which is composed of two separate chambers, with the polyol component present in one chamber and the polyisocyanate component present in the other chamber. The components are introduced into their respective chambers of the pack and the pack as a whole given an airtight and moisture-tight seal.

For small-scale applications, in which volumes of less than 1 litre will generally be used, the preferred packaging for the two component compositions will be side-by-side double cartridges or coaxial cartridges, in which two tubular chambers are arranged alongside one another or inside one another and are sealed with pistons for example. The driving of these pistons allows the components to be extruded from the cartridge, advantageously through a closely mounted static or dynamic mixer.

For certain coatings applications, the lacquer and hardener components may be mixed by hand or by machine in pre-determined amounts. Equally, the coating compositions may be applied from the packaging using that dedicated 2K spraying equipment which is commercially available.

For larger applications, particularly for applications in industrial manufacture, the two components of the coating compositions may advantageously be stored in drums or pails. In this case the two components are extruded via hydraulic presses, in particular by way of follower plates, and are supplied via pipelines to a mixing apparatus which can ensure fine and highly homogeneous mixing of the crosslinker and binder components.

With any package it is important that the polyisocyanate component at least be given an airtight and moisture-tight seal, so that both components can be stored for a long time, ideally for 12 months or longer.

The coating composition of the current invention shows particular utility as a clear coat, base coat and / or pigmented top coat. The coating compositions may applied by conventional application methods such as brushing, roll coating, doctor-blade application, printing methods, air-atomized spray, air-assisted spray, airless spray, high volume low pressure spray, and air-assisted airless spray.

It is recommended that the coating compositions be applied to a wet film thickness of from 10 to 500µm. The application of thinner layers within this range is more economical and provides for a reduced likelihood of thick cured regions that may require extra sanding. However, great control must be exercised in applying thinner coatings so as to avoid the formation of a discontinuous cured film.

The applied coating layers should be exposed to sufficient curing conditions to obtain a thorough cure. Suitable curing conditions may be determined empirically based on the particular spraying equipment, the substrate employed and the ambient temperature. Curing temperatures preferably are between 0° and 130°C and more preferably between 20° and 60°C.

The coating compositions according to the invention find utility in: the coating of glass; the coating of mineral building materials, such as lime- and/or cement-bonded plasters, gypsum-containing surfaces, fiber cement building materials and concrete; the painting and sealing of wood and wooden materials, such as chipboard, fiber board and paper; the painting and coating of metallic surfaces; coating and painting of asphalt- and bitumen-containing pavements; the painting and sealing of various plastic surfaces; and, the coating of leather and textiles. It is also envisaged that the coating compositions may be used for surface-to-surface bonding of various materials and may be used for bonding the same or different materials to one another.

### Example

The present invention is now illustrated by the following example. As used herein: Desmophen A 450 BA/X is a hydroxyl-functional polyacrylate resin available from Viverso.

Disperbyk-174 is a pigment concentrate available from BYK-Chemie.

Desmodur N 75 BA is an aliphatic polyisocyanate resin based on hexamethylenediisocyanate available from Bayer Chemie.

Borchi Kat 22 tin-free catalyst is available from the OMG Borchers.

The first component of the coating composition of this Example was prepared in accordance with the specification in Table 1 hereinbelow:

**Table 1**

| Ingredient | % By weight |
|---|---|
| Butyl Acetate | 17 |
| Desmophen A 450 BA/X. | 35 |
| Water | 25.9 |
| 2-Propoxy ethanol | 10 |
| Silica Matting agents | 3.5 |
| Zinc Stearate paste | 1.9 |
| Cellulose Ester | 3 |
| Flow additive | 0.2 |
| Silicone Defoamer | 1 |
| Tin-Free Catalyst (Borchi Kat 22) | 1.5 |
| Disperbyk-174 | 1 |

The cellulose ester performance additive was mixed slowly into the butyl acetate solvent until it completely dissolved therein. The hydroxyl-functional polyacrylate, pigment paste, silica matting agents and zinc oxide paste were then added to the solution under mixing. Water and 2-propoxyethanol were added to the resultant mixture under stirring conditions which were sufficient to create a water-in-oil emulsion to which was then added the silicone defoamer, flow additive and tin-free catalyst.

The second or cross-linking component of the coating composition of this Example was prepared in accordance with the specification in Table 2 hereinbelow:

**Table 2**

| Ingredient | % By Weight |
|---|---|
| Desmodur N 75 BA | 70 |
| Butyl Acetate | 30 |

The first and second components as defined above were mixed in a ratio lacquer to crosslinker of 10: 1. 200µl of the resultant mixture was immediately applied onto black glass using a film applicator and was allowed to air dry at ambient temperature (25°C) for 3o minutes. The film was then further dried by heating at 60°C for 1 hour.

The surface gloss of the resultant film was 20 (+/- 2) % when measured from an angle of 60 degrees using a BYK Gardner Multigloss meter in accordance with either ASTM D2457 or ASTM D523.

On a visual inspection of the film made at the same time as the gloss evaluation the coating was found to have good clarity and to be free of obvious contamination.

## Claims

1. A solvent-borne two-component (2K) coating composition comprising:
as a first component, a dispersion comprising: a hydroxyl-functional acrylate binder; a first solvent being at least one compound selected from the group consisting of 2-propoxyethanol and 2-butoxyethanol; water in an amount of from 5 to 50% by weight of the composition; and, optionally at least one further organic solvent; and, as a second component, at least one crosslinking agent for said hydroxyl-functional acrylate binder.

2. A solvent-borne two-component (2K) polyurethane coating composition according to claim 1, wherein said second component comprises at least one crosslinking agent having isocyanate groups.

3. The two-component polyurethane coating composition of claim 2, wherein said hydroxyl-functional acrylate binder has a number average molecular weight (Mₙ), as determined by gel permeation chromatography, of from 1,000 to 10,000.

4. The two-component polyurethane coating composition of claim 2 or claim 3, wherein said hydroxyl-functional acrylate binder has a hydroxyl value of from 30 to 250mg KOH/g of polymer.

5. The two-component polyurethane coating composition of any one of claims 2 to 4, wherein said hydroxyl-functional acrylate binder has an acid value (based on solids) of from 0 to 100 mg KOH/g of polymer.

6. The two-component polyurethane coating composition of any one of claims 2 to 5, comprising from 10 to 50%, preferably from 10 to 45%, and more preferably from 10 to 40% water by weight of the composition.

7. The two-component polyurethane coating composition of any one of claims 2 to 6, comprising from 10 to 40% of said first solvent by weight of the composition.

8. The two-component polyurethane coating composition of any one of claims 2 to 7, wherein the first solvent comprises 2-propoxyethanol.

9. The two-component polyurethane coating composition of any one of claims 2 to 8, wherein the first component comprises at least one further organic solvent and has a solids content of from 10wt.% to 60wt.%, preferably from 35 to 60 wt.%.

10. The two-component polyurethane coating composition of any one of claims 2 to 10, wherein the second component has a solids content of from 40wt.% to 100wt.%, preferably from 60 wt.% to 100 wt.%.

11. A process for coating a wooden, metal, glass, plastic, mineral or textile substrate comprising applying the coating composition of any one of claims 2 to 10 to the substrate and curing the coating at a temperature of from 0°C to 130°C, preferably from 20° to 80°C.

12. The process according to claim 11, wherein said substrate is wooden.

13. The coated substrate obtainable by the process defined in claim 11 or claim 12.

## Patentansprüche

1. Lösungsmittelbasierte Zweikomponenten (2K)-Beschichtungszusammensetzung umfassend:
als eine erste Komponente eine Dispersion umfassend: einem hydroxylfunktionellen Acrylatbinder; einem ersten Lösungsmittel, das mindestens eine Verbindung ist, die aus der Gruppe ausgewählt ist, die 2-Propoxyethanol und 2-Butoxyethanol aufweist; Wasser in einer Menge von 5 bis 50 Gew.-% der Zusammensetzung; und wahlweise mindestens ein weiteres organisches Lösungsmittel; und als zweite Komponente mindestens ein Vernetzungsmittel für den hydroxylfunktionellen Acrylatbinder.

2. Lösungsmittelbasierte Zweikomponenten (2K)-Polyurethan-Beschichtungszusammensetzung nach Anspruch 1, wobei die zweite Komponente mindestens ein Vernetzungsmittel umfasst, das Isocyanatgruppen besitzt.

3. Zweikomponenten-Polyurethan-Beschichtungszusammensetzung nach Anspruch 2, wobei der hydroxylfunktionelle Acrylatbinder ein Zahlenmittelwert des Molekulargewichts (Mₙ), wie bestimmt durch Gel-PermeationsChromatographie, von 1.000 bis 10.000 hat.

4. Zweikomponenten-Polyurethan-Beschichtungszusammensetzung nach Anspruch 2 oder 3, wobei der hydroxylfunktionelle Acrylatbinder einen Hydroxylwert von 30 bis 250 mg KOH/g Polymer hat.

5. Zweikomponenten-Polyurethan-Beschichtungszusammensetzung nach einem der Ansprüche 2 bis 4, wobei der hydroxylfunktionelle Acrylatbinder eine Säurezahl (basierend auf den Feststoffen) von 0 bis 100 mg KOH/g Polymer hat.

6. Zweikomponenten-Polyurethan-Beschichtungszusammensetzung nach einem der Ansprüche 2 bis 5, umfassend von 10 bis 50 %, vorzugsweise von 10 bis 45 % und weiter bevorzugt von 10 bis 40 % Wasser, bezogen auf das Gewicht der Zusammensetzung.

7. Zweikomponenten-Polyurethan-Beschichtungszusammensetzung nach einem der Ansprüche 2 bis 6, umfassend von 10 bis 40 % des ersten Lösungsmittels, bezogen auf das Gewicht der Zusammensetzung.

8. Zweikomponenten-Polyurethan-Beschichtungszusammensetzung nach einem der Ansprüche 2 bis 7, wobei das erste Lösungsmittel 2-Propoxy-ethanol umfasst.

9. Zweikomponenten-Polyurethan-Beschichtungszusammensetzung nach einem der Ansprüche 2 bis 8, wobei die erste Komponente mindestens ein weiteres organisches Lösungsmittel umfasst und einen Feststoffgehalt von 10 Gew.-% bis 60 Gew.-%, vorzugsweise von 35 bis 60 Gew.-% hat.

10. Zweikomponenten-Polyurethan-Beschichtungszusammensetzung nach einem der Ansprüche 2 bis 10, wobei die zweite Komponente einen Feststoffgehalt von 40 Gew.-% bis 100 Gew.-%, vorzugsweise von 60 Gew.-% bis 100 Gew.-% hat.

11. Verfahren zum Beschichten eines Holzsubstrats, Metallsubstrats, Glassubstrats, Kunststoffsubstrats, Mineralstoffsubstrats oder Textilsubstrats umfassend das Auftragen der Beschichtungszusammensetzung nach einem der Ansprüche 2 bis 10 auf das Substrat und das Aushärten der Beschichtung bei einer Temperatur von 0°C bis 130°C, vorzugsweise von 20° bis 80°C.

12. Verfahren nach Anspruch 11, wobei das Substrat ein Holzsubstrat ist.

13. Beschichtetes Substrat erhältlich durch das in Anspruch 11 oder 12 definierte Verfahren.

## Revendications

1. Composition de revêtement à deux composants (2K) en suspension dans un solvant comprenant :
comme premier composant, une dispersion comprenant : un liant acrylate à fonctionnalité hydroxyle ; un premier solvant étant au moins un composé sélectionné dans le groupe constitué du 2-propoxyéthanol et du 2-butoxyéthanol ; de l'eau en une quantité allant de 5 à 50% en poids de la composition ; et, éventuellement au moins un autre solvant organique ; et, comme deuxième composant, au moins un agent de réticulation pour ledit liant acrylate à fonctionnalité hydroxyle.

2. Composition de revêtement polyuréthane à deux composants (2K) en suspension dans un solvant selon la revendication 1, dans laquelle ledit deuxième composant comprend au moins un agent de réticulation ayant des groupes isocyanate.

3. Composition de revêtement polyuréthane à deux composants de la revendication 2, dans laquelle ledit liant acrylate à fonctionnalité hydroxyle a une masse moléculaire moyenne en nombre (Mₙ), telle que déterminée par chromatographie par perméation de gel, allant de 1000 à 10 000.

4. Composition de revêtement polyuréthane à deux composants de la revendication 2 ou 3, dans laquelle ledit liant acrylate à fonctionnalité hydroxyle a un indice d'hydroxyle allant de 30 à 250 mg de KOH/g de polymère.

5. Composition de revêtement polyuréthane à deux composants de l'une quelconque des revendications 2 à 4, dans laquelle ledit liant acrylate à fonctionnalité hydroxyle a un indice d'acide (sur la base de matières solides) allant de 0 à 100 mg de KOH/g de polymère.

6. Composition de revêtement polyuréthane à deux composants de l'une quelconque des revendications 2 à 5, comprenant de 10 à 50%, de préférence de 10 à 45%, et idéalement de 10 à 40% d'eau en poids de la composition.

7. Composition de revêtement polyuréthane à deux composants de l'une quelconque des revendications 2 à 6, comprenant de 10 à 40% dudit premier solvant en poids de la composition.

8. Composition de revêtement polyuréthane à deux composants de l'une quelconque des revendications 2 à 7, dans laquelle le premier solvant comprend du 2-propoxyéthanol.

9. Composition de revêtement polyuréthane à deux composants de l'une quelconque des revendications 2 à 8, dans laquelle le premier composant comprend au moins un autre solvant organique et a une teneur en matières solides allant de 10% à 60% en poids, de préférence de 35 à 60% en poids.

10. Composition de revêtement polyuréthane à deux composants de l'une quelconque des revendications 2 à 9, dans laquelle le deuxième composant a une teneur en matières solides allant de 40% à 100% en poids, de préférence de 60 % à 100% en poids.

11. Procédé de revêtement d'un substrat en bois, en métal, en verre, en plastique, textile ou minéral, comprenant l'application de la composition de revêtement de l'une quelconque des revendications 2 à 10 au substrat et le durcissement du revêtement à une température allant de 0°C à 130°C, de préférence de 20° à 80°C.

12. Procédé selon la revendication 11, dans lequel ledit substrat est en bois.

13. Substrat revêtu susceptible d'être obtenu par le procédé défini dans la revendication 11 ou 12.
